# EUROPEAN PATENT APPLICATION

(11) **EP 4 783 552 A1**
(43) Date of publication of application: **29.07.2026**
(21) Application number: 24876018.3
(22) Date of filing: 20.05.2024
(51) Int. Cl.: H04L 67/10

(54) **THREE-DIMENSIONAL DATA ACQUISITION METHOD AND RELATED DEVICE**

(30) Priority: 13.10.2023 CN 202311330056; 12.01.2024 CN 202410050383
(71) Applicant: Huawei Cloud Computing Technologies Co., Ltd., Gui'an New District, Guizhou 550025 (CN)
(72) Inventor: SHAN, Weihua, Guiyang, Guizhou 550025 (CN); DONG, Yang, Guiyang, Guizhou 550025 (CN); YUAN, Lin, Guiyang, Guizhou 550025 (CN)
(74) Representative: Goddar, Heinz J.
(86) International application number: PCT/CN2024/094221
(87) International publication number: WO 2025/077191

(57) **Abstract**

This application discloses a three-dimensional data obtaining method and a related apparatus, and relates to the field of internet technologies. The method includes: receiving a data obtaining request sent by a user terminal, where the data obtaining request carries a target uniform resource locator URL and three-dimensional indication information, the target URL is a URL of target virtual space, and the three-dimensional indication information indicates a target three-dimensional model in the target virtual space; obtaining data of the target three-dimensional model based on the target URL and the three-dimensional indication information; and sending the data of the target three-dimensional model to the user terminal. In this application, three-dimensional data is sent to the user terminal via a content delivery network, so that a three-dimensional data delivery speed can be improved. In addition, an edge node closest to the user terminal is used as a first node, and after obtaining the three-dimensional data, the first node sends the three-dimensional data to the user terminal, so that efficiency of obtaining the three-dimensional data by the user terminal can be improved.

## Description

This application claims priorities to Chinese Patent Application No. 202311330056.9, filed on October 13, 2023 and entitled "DATA DELIVERY METHOD AND APPARATUS, AND COMPUTE DEVICE CLUSTER", and to Chinese Patent Application No. 202410050383.7, filed on January 12, 2024 and entitled "THREE-DIMENSIONAL DATA OBTAINING METHOD AND RELATED APPARATUS", which are incorporated herein by reference in their entireties.

### TECHNICAL FIELD

This application relates to the field of internet technologies, and in particular, to a three-dimensional data obtaining method and a related apparatus.

### BACKGROUND

A three-dimensional (three-dimensional, 3D) technology has features such as virtual reality, instant interaction, lean efficiency, and emotional attachment. Therefore, the three-dimensional technology is widely explored and applied in representative fields of the tertiary industry like retail, culture, education, and entertainment. In addition, in more industries, the three-dimensional technology gradually becomes a general technology. For example, in fields such as agriculture, manufacturing, and construction, an information exchange and sharing platform ,centered around three-dimensional data emerges, which has advantages such as visualization, parameterization, and full-cycle interaction. Therefore, how to obtain the three-dimensional data becomes one of the focuses.

### SUMMARY

This application provides a three-dimensional data obtaining method and a related apparatus, to implement quick delivery and sharing of three-dimensional data. The technical solutions are as follows.

According to a first aspect, a three-dimensional data obtaining method is provided, applied to a first node in a content delivery network, where the content delivery network includes a plurality of nodes, and the first node is an edge node in the plurality of nodes. The method includes: receiving a data obtaining request sent by a user terminal, where the data obtaining request carries a target uniform resource locator URL and three-dimensional indication information, the target URL is a URL of target virtual space, and the three-dimensional indication information indicates a target three-dimensional model in the target virtual space; obtaining data of the target three-dimensional model based on the target URL and the three-dimensional indication information; and sending the data of the target three-dimensional model to the user terminal.

Because the content delivery network can nearby obtain data needed by the user, that is, the data of the target three-dimensional model, sending the data of the target three-dimensional model to the user terminal via the content delivery network can improve a delivery speed of the three-dimensional data. In addition, an edge node closest to the user terminal is used as the first node, and after obtaining the data of the target three-dimensional model, the first node stores the data of the target three-dimensional model and sends the data of the target three-dimensional model to the user terminal. In comparison with a method for storing all data in a same node, in this application, efficiency of obtaining the three-dimensional data by the user terminal can be improved, and network transmission costs of the three-dimensional data are reduced.

Optionally, the obtaining the data of the target three-dimensional model based on the target URL and the three-dimensional indication information includes: if the first node does not cache all the data of the target three-dimensional model, determining a second node from the plurality of nodes based on a feature of the target three-dimensional model, and obtaining, based on the target URL and the three-dimensional indication information, the data of the target three-dimensional model from three-dimensional data cached by the second node.

When the first node does not cache all the data of the target three-dimensional model, the first node may obtain the data of the target three-dimensional model from the three-dimensional data cached by the second node. In other words, the second node may share the three-dimensional data with the first node, to implement three-dimensional data sharing. In addition, reliability of obtaining the three-dimensional data can be ensured by obtaining the data of the target three-dimensional model from the second node.

Optionally, the content delivery network further includes a scheduling node; and the determining the second node from the plurality of nodes based on the feature of the target three-dimensional model includes: if the first node caches origin pull scheduling information, determining the second node from the origin pull scheduling information based on the feature of the target three-dimensional model, where the origin pull scheduling information indicates a node that performs data origin pull for a three-dimensional model having a different feature; or if the first node does not cache the origin pull scheduling information, obtaining the origin pull scheduling information from the scheduling node, and determining the second node from the origin pull scheduling information based on the feature of the target three-dimensional model.

The second node is determined in different manners based on whether the first node caches the origin pull scheduling information, so that the second node can be quickly determined. In addition, the second node may be a node at a same layer as the first node or at an upper layer of the first node and connected to the first node. Therefore, in this application, downward data origin pull can be performed, and leftward and rightward data origin pull can be further performed, to increase manners of data origin pull.

Optionally, the target virtual space is divided into a plurality of three-dimensional slices, and data of the plurality of three-dimensional slices is stored hierarchically based on a target data structure; and the obtaining the data of the target three-dimensional model based on the target URL and the three-dimensional indication information includes: determining at least one slice index based on the target URL and the three-dimensional indication information, where the at least one slice index is an index of at least one three-dimensional slice included in the target three-dimensional model; and hierarchically searching the target data structure based on the at least one slice index to obtain data of the at least one three-dimensional slice.

The target virtual space is divided into the plurality of three-dimensional slices, and the data of the plurality of three-dimensional slices is stored hierarchically. This can reduce occupation of storage space. In addition, the target data structure is hierarchically searched based on the at least one slice index of the target three-dimensional model. This can improve a query speed and optimize query performance.

Optionally, the three-dimensional indication information includes a three-dimensional coordinate range; and the determining the at least one slice index based on the target URL and the three-dimensional indication information includes: determining the at least one slice index from a coordinate mapping relationship based on the target URL and the three-dimensional coordinate range, where the coordinate mapping relationship is used to store a mapping relationship among a URL, three-dimensional coordinates, and a slice index.

When the three-dimensional indication information includes the three-dimensional coordinate range, the at least one slice index may be determined based on the target URL and three-dimensional coordinates. For example, the three-dimensional indication information may be "3DRange: coords=[(x-x1, y-y1, z-z1)]", where 3DRange represents a three-dimensional region, coords represents a coordinate range, x-x1 represents a coordinate range of the target three-dimensional model on an x-axis, y-y1 represents a coordinate range of the target three-dimensional model on a y-axis, and z-z1 represents a coordinate range of the target three-dimensional model on a z-axis, where x1 is greater than x, y1 is greater than y, and z1 is greater than z. A slice index (i, j, k) corresponding to three-dimensional coordinates (x, y, z) may be determined from the coordinate mapping relationship based on the target URL and the three-dimensional coordinates (x, y, z). A slice index (i1, j1, k1) corresponding to three-dimensional coordinates (x1, y1, z1) may be determined from the coordinate mapping relationship based on the target URL and the three-dimensional coordinates (x1, y1, z1). Similarly, a slice index corresponding to other three-dimensional coordinates in the three-dimensional coordinate range may be determined from the coordinate mapping relationship.

Optionally, the target three-dimensional model is a cone-shaped model, and the three-dimensional indication information includes a cone parameter; and the determining the at least one slice index based on the target URL and the three-dimensional indication information includes: determining, based on the cone parameter, a three-dimensional coordinate range corresponding to the target three-dimensional model; and determining the at least one slice index from a coordinate mapping relationship based on the target URL and the three-dimensional coordinate range, where the coordinate mapping relationship is used to store a mapping relationship among a URL, three-dimensional coordinates, and a slice index.

The cone-shaped three-dimensional model may be a view-frustum model, or may be a light-cone model. If the target three-dimensional model is the view-frustum model, the cone parameter includes a vertical field of view, an aspect ratio of a plane, a coordinate of a near plane, and a coordinate of a far plane. The vertical field of view is an angle between two planes in a vertical direction, the aspect ratio of the plane is an aspect ratio of a plane perpendicular to a specified coordinate axis, and the coordinate of the near plane and the coordinate of the far plane are coordinates on the specified coordinate axis. If the target three-dimensional model is the light-cone model, the cone parameter includes a cone angle, a diameter of a near plane, and a diameter of a far plane. In this way, the user terminal may determine, based on a type of the cone of the target three-dimensional model, the cone parameter included in the three-dimensional indication information. This improves flexibility of obtaining the target three-dimensional model by the user terminal.

Optionally, before the receiving the data obtaining request sent by the user terminal, the method further includes: dividing the target virtual space into the plurality of three-dimensional slices; setting indexes of the plurality of three-dimensional slices to obtain a plurality of slice indexes; storing the data of the plurality of three-dimensional slices into the target data structure based on the plurality of slice indexes; and storing the target URL, three-dimensional coordinates of the plurality of three-dimensional slices, and the plurality of slice indexes into the coordinate mapping relationship.

The target virtual space is divided into the plurality of three-dimensional slices, and the data of the plurality of three-dimensional slices is stored into the target data structure based on the corresponding slice indexes, so that occupation of storage space can be reduced. In addition, the target URL, the three-dimensional coordinates of the plurality of three-dimensional slices, and the plurality of slice indexes are stored into the coordinate mapping relationship, so that a corresponding slice index can be quickly determined from the coordinate mapping relationship based on the target URL and the three-dimensional coordinates. This improves efficiency of determining a slice index.

Optionally, the three-dimensional indication information includes a query condition; and the determining the at least one slice index based on the target URL and the three-dimensional indication information includes: determining, from a condition mapping relationship based on the target URL and the query condition, a slice index that meets the query condition, to obtain the at least one slice index, where the condition mapping relationship is used to store a mapping relationship among a URL, a slice attribute, and a slice index.

When the three-dimensional indication information includes the query condition, the at least one slice index may be obtained based on the target URL and the query condition. For example, the three-dimensional indication information is "3DRange: queries=(xxxxx)", where 3DRange represents a three-dimensional region, and queries represents the query condition. The slice index whose slice attribute meets the query condition may be determined from the condition mapping relationship based on the target URL and the query condition. For example, if the three-dimensional indication information is "3DRange: queries=(square)", a slice index of a three-dimensional slice whose shape is "square" may be determined from the condition mapping relationship based on "square" in the query condition and the target URL. Different requirements of the user terminal can be met.

Optionally, before the receiving the data obtaining request sent by the user terminal, the method further includes: dividing the target virtual space into the plurality of three-dimensional slices; setting indexes of the plurality of three-dimensional slices to obtain a plurality of slice indexes; storing the data of the plurality of three-dimensional slices into the target data structure based on the plurality of slice indexes; and storing the target URL, attribute information of the plurality of three-dimensional slices, and the plurality of slice indexes into the condition mapping relationship.

The target virtual space is divided into the plurality of three-dimensional slices, and the data of the plurality of three-dimensional slices is stored into the target data structure based on the corresponding slice indexes, so that occupation of storage space can be reduced. In addition, the target URL, the attribute information of the plurality of three-dimensional slices, and the plurality of slice indexes are stored into the condition mapping relationship, so that a corresponding slice index can be quickly determined from the condition mapping relationship based on the target URL and the attribute information of the three-dimensional slices. This improves efficiency of determining a slice index.

Optionally, the target virtual space is divided into a plurality of three-dimensional slices, data and attribute information of the plurality of three-dimensional slices are stored hierarchically based on a target data structure, and the three-dimensional indication information includes a query condition; and the obtaining the data of the target three-dimensional model based on the target URL and the three-dimensional indication information includes: determining a plurality of slice indexes based on the target URL, where the plurality of slice indexes are indexes of the plurality of three-dimensional slices; hierarchically searching the target data structure based on the plurality of slice indexes to obtain the data of the plurality of three-dimensional slices and the attribute information of each three-dimensional slice; and selecting, from the plurality of three-dimensional slices based on the attribute information of the plurality of three-dimensional slices, a three-dimensional slice that meets the query condition, and using data of the selected three-dimensional slice as the data of the target three-dimensional model.

The data and the attribute information of the three-dimensional slice are stored hierarchically based on the target data structure, so that occupation of storage space can be reduced. In addition, when the three-dimensional indication information includes the query condition, the attribute information of the three-dimensional slice does not need to be queried from the condition mapping relationship, and the attribute information of the three-dimensional slice may be obtained when the data of the three-dimensional slice is obtained from the target data structure. Certainly, the condition mapping relationship may not store the attribute information of the three-dimensional slice, so that storage space occupied by the condition mapping relationship can be reduced.

According to a second aspect, a three-dimensional data obtaining apparatus is provided. The three-dimensional data obtaining apparatus has a function of implementing behavior of the three-dimensional data obtaining method in the first aspect. The three-dimensional data obtaining apparatus includes at least one module, and the at least one module is configured to implement the three-dimensional data obtaining method provided in the first aspect.

According to a third aspect, a compute device cluster is provided. The compute device cluster includes at least one compute device, each compute device includes a processor and a memory, and the memory of the at least one compute device is configured to store a computer program for performing the three-dimensional data obtaining method provided in the first aspect. The processor of the at least one compute device is configured to execute the computer program stored in the memory of the at least one compute device, to implement the three-dimensional data obtaining method according to the first aspect.

Optionally, the compute device cluster may further include a communication bus, and the communication bus is configured to establish a connection between the processor and the memory of the at least one compute device.

According to a fourth aspect, a computer-readable storage medium is provided. The storage medium stores instructions, and when the instructions are run in a compute device cluster, the compute device cluster is caused to perform steps of the three-dimensional data obtaining method according to the first aspect.

According to a fifth aspect, a computer program product including instructions is provided. When the instructions are run by a compute device cluster, the compute device cluster is caused to perform steps of the three-dimensional data obtaining method according to the first aspect. In other words, a computer program is provided. When the computer program is run on a computer, the computer is caused to perform steps of the three-dimensional data obtaining method according to the first aspect.

Technical effects achieved in the second aspect, the third aspect, the fourth aspect, and the fifth aspect are similar to technical effects achieved by the corresponding technical means in the first aspect. Details are not described herein again.

### BRIEF DESCRIPTION OF DRAWINGS

FIG. 1 is a diagram of a structure of an implementation environment according to an embodiment of this application;
FIG. 2 is a diagram of a structure of another implementation environment according to an embodiment of this application;
FIG. 3 is a diagram of a structure of a compute device according to an embodiment of this application;
FIG. 4 is a flowchart of a three-dimensional data obtaining method according to an embodiment of this application;
FIG. 5 is a diagram of a structure of an HTTP request packet according to an embodiment of this application;
FIG. 6 is a diagram of a structure of a view-frustum model according to an embodiment of this application;
FIG. 7 is a diagram of a structure of a light-cone model according to an embodiment of this application;
FIG. 8 is a diagram of a tree-like data structure according to an embodiment of this application;
FIG. 9 is a diagram of a data structure of LevelDB according to an embodiment of this application;
FIG. 10 is a diagram of a structure of a three-dimensional data obtaining apparatus according to an embodiment of this application;
FIG. 11 is a diagram of a structure of a compute device cluster according to an embodiment of this application; and
FIG. 12 is a diagram of a structure of another compute device cluster according to an embodiment of this application.

### DESCRIPTION OF EMBODIMENTS

To make objectives, technical solutions, and advantages of embodiments of this application clearer, the following further describes in detail implementations of this application with reference to the accompanying drawings.

Before a three-dimensional data obtaining method provided in embodiments of this application is described in detail, terms, application scenarios, and implementation environments in embodiments of this application are first described.

First, the terms in embodiments of this application are described.

**Content delivery network (content delivery network, CDN)**: The content delivery network is an intelligent virtual network built on an existing network. The content delivery network uses edge servers deployed in different places and functional modules such as load balancing, content delivery, and scheduling of a central platform to enable users to obtain needed content nearby, so as to reduce network congestion, and improve a response speed and hit rate of user access. A key technology of the CDN includes content storage and delivery.

**Uniform resource locator (uniform resource locator, URL)**: The uniform resource locator is an identification method used to fully describe addresses of web pages and other resources on the internet, and is also referred to as a "web address". Each resource on the internet has a unique URL, and the resource can be accessed by entering the URL in an address bar.

**Index (index)**: The index is a data structure that can improve database query efficiency, and is constructed according to a specific rule and algorithm. The index is equivalent to a dictionary directory, and helps quickly find a corresponding record. Therefore, when searching for data by following a rule of the index, a corresponding data storage node can be found quickly, achieving quick data retrieval.

Then the application scenarios in embodiments of this application are described.

A three-dimensional technology has features such as virtual reality, instant interaction, lean efficiency, and emotional hosting. Therefore, the three-dimensional technology is widely explored and applied in representative fields of the tertiary industry like retail, culture, education, and entertainment. In addition, in more industries, the three-dimensional technology gradually becomes a general technology. For example, in fields such as agriculture, manufacturing, and construction, an information exchange and sharing platform with three-dimensional data as a core emerges. The information exchange and sharing platform has advantages such as visualization, parameterization, and interaction to a full cycle. For example, a three-dimensional virtual try-on technology can be used to create a three-dimensional model of garments. When a user wants to try on clothing, a three-dimensional intelligent scanner measures body data. Then, based on the three-dimensional model of garments and the body data, a three-dimensional virtual try-on system generates a three-dimensional intelligent human body model, to achieve a three-dimensional try-on effect. However, because users differ in body shapes and clothing requirements, a large amount of three-dimensional model data is generated. Therefore, how to share massive amounts of three-dimensional data with a plurality of users has become an urgent problem that needs to be resolved.

Based on this, embodiments of this application provide the three-dimensional data obtaining method. Based on the content delivery network, high-performance and low-cost quick delivery and sharing of three-dimensional data can be provided, and based on a used network transfer protocol, the method can be adapted to various service scenarios, so that a user can quickly obtain needed three-dimensional data.

Finally, the implementation environments in embodiments of this application are described.

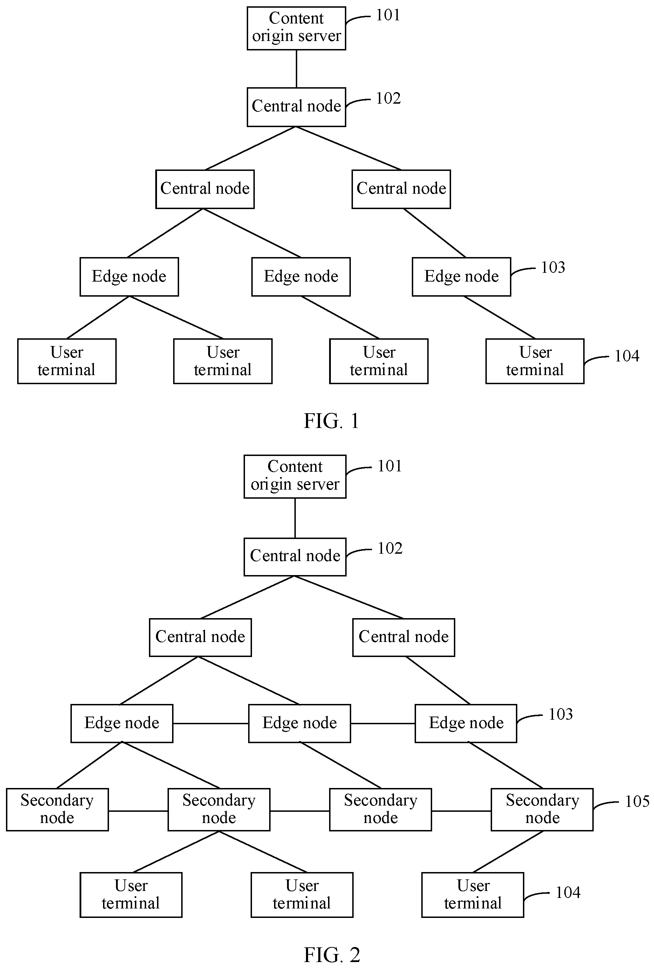

FIG. 1 is a diagram of a structure of an implementation environment according to an embodiment of this application. Refer to FIG. 1. The implementation environment includes a content origin server 101, a plurality of central nodes 102, a plurality of edge nodes 103, and a plurality of user terminals 104. The plurality of central nodes 102 and the plurality of edge nodes 103 are nodes included in the content delivery network.

The content origin server 101 may be communicatively connected to the plurality of central nodes 102, the plurality of central nodes 102 may be communicatively connected to the plurality of edge nodes 103, the plurality of edge nodes 103 may be communicatively connected to the plurality of user terminals 104, and the plurality of central nodes 102 may also be communicatively connected. The communication connection may be a wired connection or a wireless connection. This is not limited in embodiments of this application.

The content origin server 101 is configured to provide a three-dimensional model, and transmit data of the three-dimensional model to the central node 102. The central node 102 delivers the data of the three-dimensional model in the content delivery network.

The edge node 103 is a node near a network edge side of a user. The edge node 103 receives a data obtaining request sent by the user terminal 104. If the edge node 103 stores the data of the three-dimensional model, the data of the three-dimensional model may be directly sent to the user terminal 104. If the edge node 103 does not store the data of the three-dimensional model, the data of the three-dimensional model may be requested from the central node 102. When the central node 102 stores the data of the three-dimensional model, the data of the three-dimensional model is transmitted to the edge node 104. When the central node 102 does not store the data of the three-dimensional model, the data of the three-dimensional model is requested from another central node 102 or the content origin server 101. After obtaining the data of the three-dimensional model needed by the user terminal 104, the edge node 103 caches the data of the three-dimensional model, and sends the data of the three-dimensional model to the user terminal 104.

In some embodiments, referring to FIG. 2, the implementation environment further includes a plurality of secondary nodes 105. The plurality of secondary nodes 105 are nodes included in the content delivery network and are configured to receive the data obtaining request sent by the user terminal 104. The plurality of secondary nodes 105 may be communicatively connected to the plurality of edge nodes 103, the plurality of edge nodes 103 may also be communicatively connected, and the plurality of secondary nodes 105 may also be communicatively connected. The communication connection may be a wired connection or a wireless connection. This is not limited in embodiments of this application.

In the implementation environment shown in FIG. 2, if the edge node 103 does not store the data of the three-dimensional model, the data of the three-dimensional model may be requested from the central node 102 or from another edge node 103. When the another edge node 103 stores the data of the three-dimensional model, the data is transmitted to the edge node 103. When the another edge node 103 does not store the data of the three-dimensional model, the data of the three-dimensional model may be requested from the central node 102. After obtaining the data of the three-dimensional model needed by the user terminal 104, the edge node 103 caches the data of the three-dimensional model and sends the data of the three-dimensional model to the secondary node 105, so that the secondary node 105 sends the data of the three-dimensional model to the user terminal 104.

In some embodiments, the foregoing implementation environment further includes a scheduling node. The scheduling node is configured to store origin pull scheduling information. The origin pull scheduling information is used to: when the edge node 103 or the secondary node 105 does not store the data of the three-dimensional model, determine a node that needs to perform data origin pull. In other words, a node that performs data origin pull is determined by using the origin pull scheduling information, to obtain the data of the three-dimensional model from the node that performs data origin pull.

It should be noted that the implementation environment described in embodiments of this application is intended to describe the technical solutions in embodiments of this application more clearly, and does not constitute any limitation on the technical solutions provided in embodiments of this application. A person of ordinary skill in the art may learn that with evolution of a system architecture, the technical solutions provided in embodiments of this application are also applicable to similar technical problems.

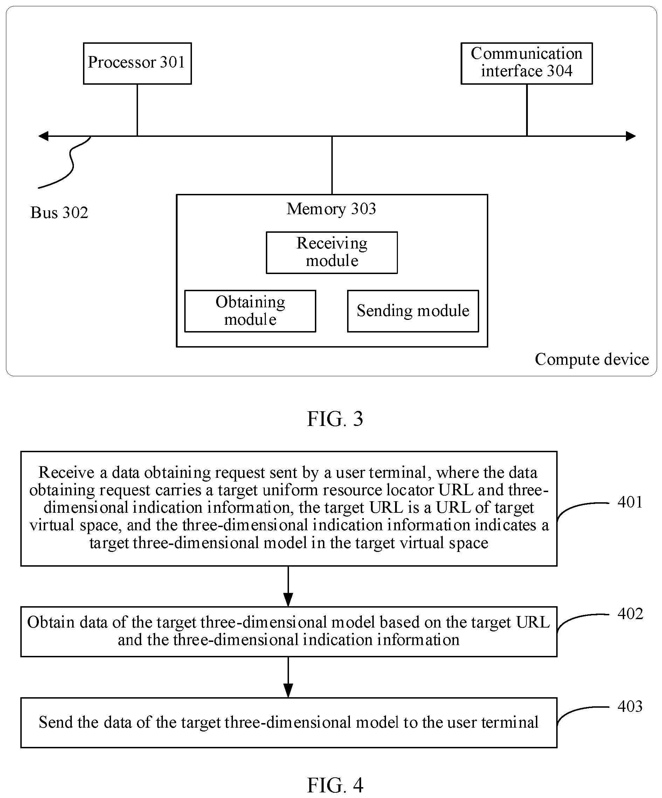

FIG. 3 is a diagram of a structure of a compute device according to an embodiment of this application. The compute device may be any compute device in a compute device cluster. The compute device may be the content origin server 101, the central node 102, the edge node 103, or the user terminal 104 shown in FIG. 1, or may be the secondary node 105 shown in FIG. 2. The compute device includes at least one processor 301, a communication bus 302, a memory 303, and at least one communication interface 304. The compute device may be a server, a terminal device, or a network device. It should be understood that quantities of processors and memories of the compute device are not limited in this application.

The processor 301 may be a general-purpose central processing unit (central processing unit, CPU), a network processor (network processor, NP), a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

The communication bus 302 is configured to transfer information between the foregoing components. The communication bus 302 may be a peripheral component interconnect (peripheral component interconnect, PCI) bus, an extended industry standard architecture (extended industry standard architecture, EISA) bus, or the like. The communication bus 302 may include an address bus, a data bus, a control bus, and the like. For ease of representation, only one thick line is used to represent the bus in the figure, but this does not mean that there is only one bus or only one type of bus.

The memory 303 may be a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be configured to carry or store expected program code in a form of instructions or data structures and that can be accessed by a computer, but is not limited thereto. The memory 303 may exist independently, and is connected to the processor 301 through the communication bus 302. The memory 303 may alternatively be integrated with the processor 301.

The communication interface 304 is configured to communicate with another device or communication network by using any transceiver-type apparatus. The communication interface 304 includes a wired communication interface, and may further include a wireless communication interface. The wired communication interface may be, for example, an ethernet interface. The ethernet interface may be an optical interface, an electrical interface, or a combination thereof. The wireless communication interface may be a wireless local area network (wireless local area network, WLAN) interface, a cellular network communication interface, a combination thereof, or the like.

In some embodiments, the memory 303 is configured to store program code for executing the solutions in this application, and the processor 301 may execute the program code stored in the memory 303. The program code 310 may include one or more modules, for example, functions of the following receiving module, obtaining module, and sending module. The compute device may implement, by using the processor 301 and the program code in the memory 303, a three-dimensional data obtaining method provided in the following embodiment in FIG. 4.

FIG. 4 is a flowchart of a three-dimensional data obtaining method according to an embodiment of this application. The method is applied to a first node in a content delivery network. The content delivery network includes a plurality of nodes, and the first node is an edge node in the plurality of nodes. As shown in FIG. 4, the method includes the following steps.

**Step 401:** Receive a data obtaining request sent by a user terminal, where the data obtaining request carries a target URL and three-dimensional indication information, the target URL is a URL of target virtual space, and the three-dimensional indication information indicates a target three-dimensional model in the target virtual space.

The target virtual space is virtual space in which the target three-dimensional model is located. The target virtual space may be virtual three-dimensional space. The virtual three-dimensional space may be a virtual world, or may be another virtual space. The target three-dimensional model may be a partial three-dimensional region or an entire three-dimensional region in the target virtual space, and the target three-dimensional model may be a point, a line, a plane, or a polyhedron in the target virtual space. The target virtual space and the target three-dimensional model are not limited in this embodiment of this application.

The target URL is used to identify the target virtual space, and the three-dimensional indication information is used to identify the target three-dimensional model. If the user terminal needs to obtain data of the partial three-dimensional region in the target virtual space, that is, the target three-dimensional model is the partial three-dimensional region in the target virtual space, the data obtaining request carries the target URL and the three-dimensional indication information. If the user terminal needs to obtain the entire three-dimensional region in the target virtual space, that is, the target three-dimensional model is the entire three-dimensional region in the target virtual space, the data obtaining request may carry the target URL and the three-dimensional indication information, or may carry only the target URL, and does not need to carry the three-dimensional indication information. In other words, when the data obtaining request carries the target URL and the three-dimensional indication information, the target three-dimensional model may be the partial three-dimensional region or the entire three-dimensional region in the target virtual space. When the data obtaining request carries the target URL but does not carry the three-dimensional indication information, the target three-dimensional model is the entire three-dimensional region in the target virtual space.

The data obtaining request may be a hypertext transfer protocol (hypertext transfer protocol, HTTP) request. In other words, the user terminal may obtain three-dimensional data by using an HTTP network transfer protocol. Certainly, the data obtaining request may alternatively be another transfer protocol request, for example, a file transfer protocol (file transfer protocol, FTP) request. This is not limited in this embodiment of this application.

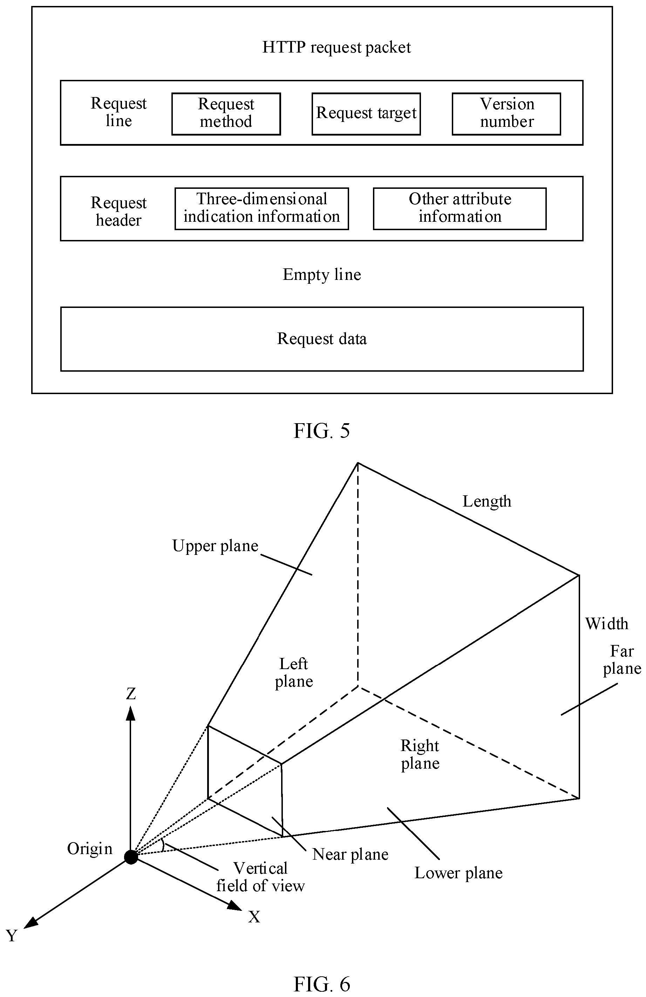

The HTTP network transfer protocol is used as an example. Refer to FIG. 5. The data obtaining request includes a request line, a request header, and an empty line. The request line is located in a 1^{st} line of a request packet, and includes a request method, a request target, and a version number, where the request method, the request target, and the version number are separated by spaces. The request method represents an operation, for example, frequently-used GET (GET) and POST (POST), performed on the target three-dimensional model. The request method of the data obtaining request in this embodiment of this application is GET. The request target is used to carry the target URL. The version number represents a used HTTP protocol version. The request header is located after the request line, and is used to carry the three-dimensional indication information, and may be further used to carry other attribute information. In some embodiments, for example, when the request method is POST, the HTTP request further includes request data, and the request data represents to-be-transmitted data in the HTTP.

It should be noted that, in the implementation environment shown in FIG. 1, the first node is an edge node communicatively connected to the user terminal. In the implementation environment shown in FIG. 2, the first node is a secondary node communicatively connected to the user terminal. Certainly, in another implementation environment, the first node may be another node communicatively connected to the user terminal. This is not limited in this embodiment of this application.

**Step 402:** Obtain data of the target three-dimensional model based on the target URL and the three-dimensional indication information.

In some embodiments, the target virtual space is divided into a plurality of three-dimensional slices, and data of the plurality of three-dimensional slices is stored hierarchically based on a target data structure. The data of the target three-dimensional model may be obtained through the following step (1) and step (2).
(1) Determine at least one slice index based on the target URL and the three-dimensional indication information, where the at least one slice index is an index of at least one three-dimensional slice included in the target three-dimensional model.

The target three-dimensional model may be a point, a line, a plane, or a polyhedron. When the target three-dimensional model is a point, a line segment with a very short length, a plane with a very small area, or a polyhedron with a very small volume, one slice index may be determined based on the target URL and the three-dimensional indication information, that is, the target three-dimensional model includes one three-dimensional slice. When the target three-dimensional model is a line segment with a long length, a plane with a large area, or a polyhedron with a large volume, a plurality of slice indexes may be determined based on the target URL and the three-dimensional indication information, that is, the target three-dimensional model includes a plurality of three-dimensional slices.

In this embodiment of this application, the three-dimensional indication information may be represented in a plurality of manners, for example, a three-dimensional coordinate range, a cone parameter, and a query condition. The following uses the three-dimensional coordinate range, the cone parameter, and the query condition as an example to describe, in the following three implementations, a process of determining the at least one slice index.

**In a first implementation,** the three-dimensional indication information includes the three-dimensional coordinate range. In this case, the at least one slice index is determined from a coordinate mapping relationship based on the target URL and the three-dimensional coordinate range, where the coordinate mapping relationship is used to store a mapping relationship among a URL, three-dimensional coordinates, and a slice index.

Because the three-dimensional indication information includes the three-dimensional coordinate range, the three-dimensional coordinate range includes at least one set of three-dimensional coordinates, and the coordinate mapping relationship stores the mapping relationship among a URL, three-dimensional coordinates, and a slice index, at least one corresponding slice index may be determined from the coordinate mapping relationship based on the target URL and the at least one set of three-dimensional coordinates in the three-dimensional coordinate range.

In an example, if the target three-dimensional model is the partial three-dimensional region in the target virtual space, the three-dimensional coordinate range is a partial coordinate range of the target virtual space. For example, the three-dimensional indication information may be "3DRange: coords=[(x-x1, y-y1, z-z1)]", where 3DRange represents a three-dimensional region, coords represents a coordinate range, x-x1 represents a coordinate range of the target three-dimensional model on an x-axis, y-y1 represents a coordinate range of the target three-dimensional model on a y-axis, and z-z1 represents a coordinate range of the target three-dimensional model on a z-axis, where x1 is greater than x, y1 is greater than y, and z1 is greater than z. A slice index (i, j, k) corresponding to three-dimensional coordinates (x, y, z) may be determined from the coordinate mapping relationship based on the target URL and the three-dimensional coordinates (x, y, z). A slice index (i1, j1, k1) corresponding to three-dimensional coordinates (x1, y1, z1) may be determined from the coordinate mapping relationship based on the target URL and the three-dimensional coordinates (x1, y1, z1). Similarly, a slice index corresponding to other three-dimensional coordinates in the three-dimensional coordinate range may be determined from the coordinate mapping relationship.

In another example, if the target three-dimensional model is the entire three-dimensional region in the target virtual space, the three-dimensional coordinate range is an entire coordinate range of the target virtual space. For example, the three-dimensional indication information may be "3DRange: coords=[(0-∞, 0-∞, 0-∞)]", or may be "3DRange: coords=[(0-x0, 0-y0, 0-z0)]", where 0-x0 represents an entire range of the target virtual space on an x-axis, 0-y0 represents an entire range of the target virtual space on a y-axis, and 0-z0 represents an entire range of the target virtual space on a z-axis. In other words, the three-dimensional indication information includes the entire three-dimensional coordinate range of the target virtual space.

The foregoing three-dimensional coordinates may be coordinates in a world space location coordinate system (world coordinate) in the target virtual space. The world space location coordinate system is also referred to as a measurement coordinate system, and is a three-dimensional rectangular coordinate system. The world space location coordinate system may be freely determined based on an actual situation. Certainly, the three-dimensional coordinates may alternatively be in another coordinate system. This is not limited in this embodiment of this application.

**In a second implementation,** the target three-dimensional model is a cone-shaped model, and the three-dimensional indication information includes the cone parameter. In this case, a three-dimensional coordinate range corresponding to the target three-dimensional model is determined based on the cone parameter; and the at least one slice index is determined from a coordinate mapping relationship based on the target URL and the three-dimensional coordinate range, where the coordinate mapping relationship is used to store a mapping relationship among a URL, three-dimensional coordinates, and a slice index.

Because the three-dimensional indication information includes the cone parameter, and indicates that the target three-dimensional model is cone-shaped, the coordinate mapping relationship stores the mapping relationship among a URL, three-dimensional coordinates, and a slice index, and does not store a relationship between a cone parameter and a slice index, the three-dimensional coordinate range corresponding to the target three-dimensional model needs to be determined based on the cone parameter, and then the at least one slice index is determined from the coordinate mapping relationship based on the target URL and the three-dimensional coordinate range.

The cone-shaped three-dimensional model may be a view-frustum model, may be a light-cone model, or certainly, may be another cone-shaped model. If the target three-dimensional model is the view-frustum model, the cone parameter includes a vertical field of view, an aspect ratio of a plane, a coordinate of a near plane, and a coordinate of a far plane. The vertical field of view is an angle between two planes in a vertical direction, the aspect ratio of the plane is an aspect ratio of a plane perpendicular to a specified coordinate axis, and the coordinate of the near plane and the coordinate of the far plane are coordinates on the specified coordinate axis. If the target three-dimensional model is the light-cone model, the cone parameter includes a cone angle, a diameter of a near plane, and a diameter of a far plane.

For example, if the target three-dimensional model is a view-frustum model shown in FIG. 6, the view-frustum model is also referred to as a view frustum, and the view frustum includes an upper plane, a lower plane, a left plane, a right plane, a near plane, and a far plane. Refer to FIG. 6. A direction from an origin to the view frustum is used as a reference direction, a plane located above the reference direction is the upper plane, a plane located below the reference direction is the lower plane, a plane on the left of the reference direction is the left plane, a plane on the right of the reference direction is the right plane, a plane closer to the origin in the reference direction is the near plane, and a plane far from the origin in the reference direction is the far plane. The three-dimensional indication information may be "3DRange: frustum=(fov, width/height, near, far)", where 3DRange represents a three-dimensional region, frustum represents the view frustum, fov represents a vertical field of view of the view frustum, that is, an angle between the upper plane and the lower plane, width/height represents an aspect ratio of a plane, where the plane may be the near plane of the view frustum, the far plane of the view frustum, and a plane parallel to the near plane and the far plane, near represents a coordinate of the near plane of the view frustum, and far represents a coordinate of the far plane of the view frustum. The coordinate of the near plane and the coordinate of the far plane are coordinates on a specified coordinate axis. The specified coordinate axis may be any coordinate axis in three-dimensional coordinate axes, and may be generally set by default, or certainly may be specified by a user.

For example, if the three-dimensional indication information is "3DRange: frustum=(45, 1, 1, 1000)", assuming that the specified coordinate axis is an x-axis, it indicates that the vertical field of view of the view frustum is 45 degrees, the aspect ratio of the plane of the view frustum is 1, that is, the near plane, the far plane, and the plane parallel to the near plane and the far plane are all squares, a coordinate of the near plane on the x-axis is 1, and a coordinate of the far plane on the x-axis is 1000, that is, the near plane and the far plane of the view frustum are 999 units apart.

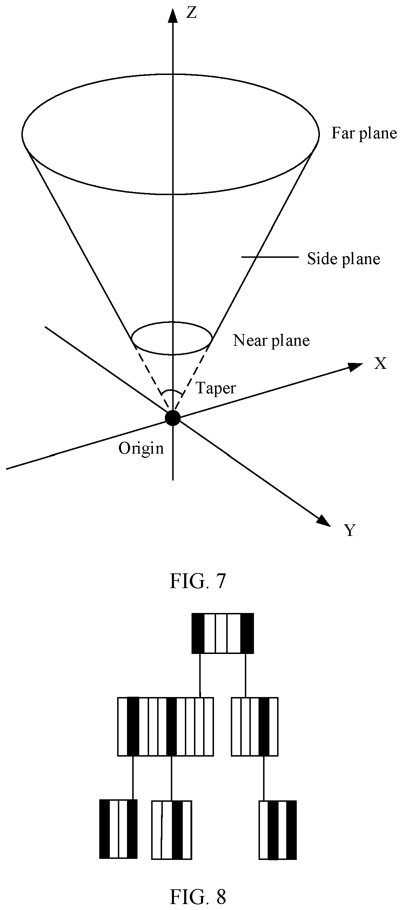

For example, if the target three-dimensional model is a light-cone model shown in FIG. 7, the light-cone model is also referred to as a light cone, and the light cone includes a near plane, a far plane, and a side plane. Refer to FIG. 7. A direction from an origin to the light cone is used as a reference direction, a plane closer to the origin in the reference direction is the near plane, a plane far from the origin in the reference direction is the far plane, and a plane connecting the near plane and the far plane is the side plane. The three-dimensional indication information may be "3DRange: cone=(taper, near, far)", where 3DRange represents a three-dimensional region, cone represents the light cone, taper represents a cone angle of the light cone, where the cone angle is also referred to as a taper, near represents a diameter of the near plane of the light cone, and far represents a diameter of the far plane of the light cone. For example, if the three-dimensional indication information is "3DRange: cone=(45, 10, 100)", it indicates that the taper of the light cone is 45 degrees, the diameter of the near plane is 10 units, and the diameter of the far plane is 100 units.

The cone parameter can represent a three-dimensional region in which the target three-dimensional model is located. Therefore, the three-dimensional coordinate range of the target three-dimensional model can be determined by using the cone parameter. In this way, the at least one slice index is determined based on the target URL and the three-dimensional coordinate range with reference to the first implementation.

For the first implementation and the second implementation, before the at least one slice index is determined from the coordinate mapping relationship, the target virtual space may be further divided into the plurality of three-dimensional slices; indexes of the plurality of three-dimensional slices are set to obtain a plurality of slice indexes; the data of the plurality of three-dimensional slices is stored into the target data structure based on the plurality of slice indexes; and the target URL, three-dimensional coordinates of the plurality of three-dimensional slices, and the plurality of slice indexes are stored into the coordinate mapping relationship.

The three-dimensional slice may be a three-dimensional volume element, which is also referred to as a voxel. The target virtual space may be divided based on a volume of the target virtual space, to obtain the plurality of three-dimensional slices. Certainly, in actual application, the target virtual space may alternatively be divided based on another dimension. This is not limited in this embodiment of this application. The indexes of the plurality of three-dimensional slices may be set according to a specific rule, provided that indexes of different three-dimensional slices are different. The rule is not specifically limited in this embodiment of this application.

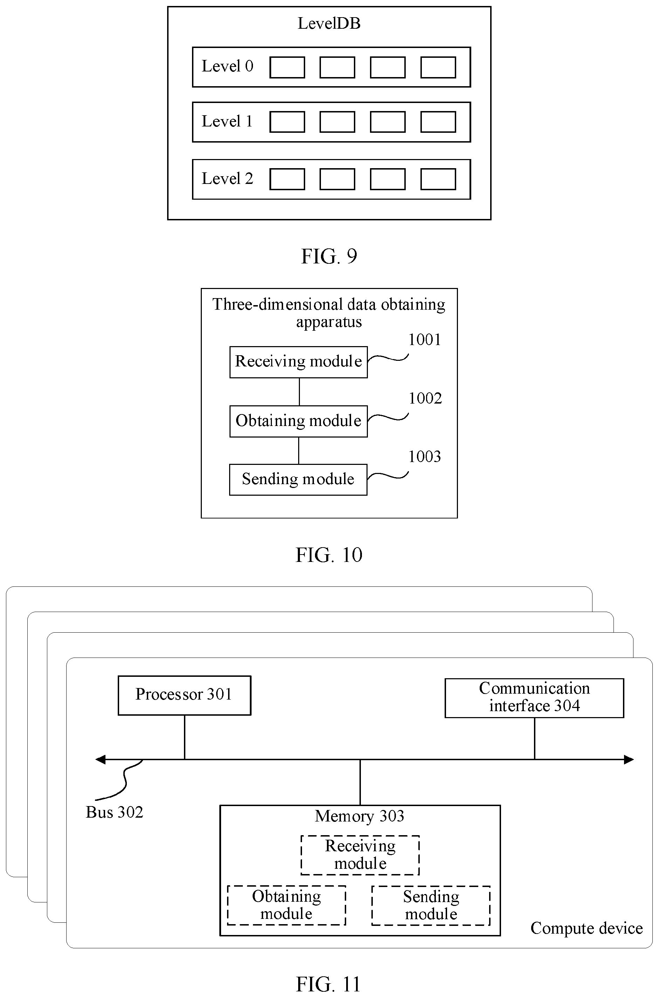

The target data structure may be a tree-like data structure shown in FIG. 8, or may be a data structure shown in FIG. 9. To be specific, the data of the plurality of three-dimensional slices may be stored hierarchically based on the tree-like data structure shown in FIG. 8, and a format of the data of the three-dimensional slices stored based on this structure may also be referred to as a volumetric data block (volumetric data block, VDB) format; the plurality of three-dimensional slices may alternatively be stored hierarchically based on the data structure shown in FIG. 9, and a format of the data of the three-dimensional slices stored based on this structure may also be referred to as a level data block (level data block, LevelDB) format.

It should be noted that, in addition to the tree-like data structure shown in FIG. 8 or the data structure shown in FIG. 9, the target data structure may be another data structure for hierarchical storage. In addition to the VDB format or the LevelDB format, the format of the data of the three-dimensional slices may be another format. This is not limited in this embodiment of this application.

The target data structure is used for hierarchical data storage. In this hierarchical data storage structure, a last layer structure is usually used to store specific data content, and another layer structure is used to store a pointing relationship between a current layer and a next layer. In addition, data of different virtual space may be stored into a same data structure. Therefore, data is stored by using a hierarchical storage structure, thereby reducing occupation of storage space.

**In a third implementation,** the three-dimensional indication information includes the query condition. In this case, a slice index that meets the query condition is determined from a condition mapping relationship based on the target URL and the query condition, to obtain the at least one slice index, where the condition mapping relationship is used to store a mapping relationship among a URL, a slice attribute, and a slice index.

The query condition indicates a condition met by the target three-dimensional model, and the condition mapping relationship stores the mapping relationship among a URL, a slice attribute, and a slice index. Therefore, a slice index whose slice attribute meets the query condition may be directly determined from the condition mapping relationship based on the target URL and the query condition.

In an example, the three-dimensional indication information is "3DRange: queries=(xxxxx)", where 3DRange represents a three-dimensional region, and queries represents the query condition. The slice index whose slice attribute meets the query condition may be determined from the condition mapping relationship based on the target URL and the query condition. For example, if the three-dimensional indication information is "3DRange: queries=(square)", a slice index of a three-dimensional slice whose shape is "square" may be determined from the condition mapping relationship based on "square" in the query condition and the target URL.

The condition mapping relationship and the foregoing coordinate mapping relationship may be in a same mapping relationship. In other words, the mapping relationship stores a mapping relationship among a URL, three-dimensional coordinates, a slice attribute, and a slice index. Therefore, when the at least one slice index is determined in the foregoing three implementations, the at least one slice index needs to be determined only from a same mapping relationship, and does not need to be determined from different mapping relationships based on a representation manner of the three-dimensional indication information. In addition, the two mapping relationships are integrated, so that repeated storage of some information can be avoided, thereby reducing occupation of storage space. Certainly, the condition mapping relationship and the foregoing coordinate mapping relationship may alternatively be two different mapping relationships. Therefore, the at least one slice index may be determined from different mapping relationships based on the representation manner of the three-dimensional indication information. In addition, a small amount of data is stored in each mapping relationship, so that a speed of querying the mapping relationship can be improved.

For the third implementation, before the at least one slice index is determined from the condition mapping relationship, the target virtual space may be further divided into the plurality of three-dimensional slices; indexes of the plurality of three-dimensional slices are set to obtain a plurality of slice indexes; the data of the plurality of three-dimensional slices is stored into the target data structure based on the plurality of slice indexes; and the target URL, attribute information of the plurality of three-dimensional slices, and the plurality of slice indexes are stored into the condition mapping relationship.

The attribute information of the three-dimensional slice may be a volume, a shape, a type, or the like of a three-dimensional model to which the three-dimensional slice belongs. In addition, attribute information of some three-dimensional slices in the plurality of three-dimensional slices may be the same, or attribute information of all the three-dimensional slices may be different. Certainly, the attribute information of the plurality of three-dimensional slices may alternatively be other attributes of the three-dimensional slices. This is not limited in this embodiment of this application.

For division of the three-dimensional slices, setting of the slice indexes, and related information of the target data structure, refer to the foregoing descriptions. Details are not described herein again.

In the foregoing three implementations, the at least one slice index may be determined by using the three-dimensional indication information with different representation manners, to improve flexibility of determining the slice index. In addition, because representation manners of three-dimensional indication information sent by different user terminals are different, based on the foregoing three implementations, a plurality of requirements of different user terminals can be met, and an application scope is wider.

(2) Hierarchically search the target data structure based on the at least one slice index to obtain data of the at least one three-dimensional slice.

The target virtual space is divided into the plurality of three-dimensional slices, and the data of the plurality of three-dimensional slices is stored hierarchically based on the target data structure. In addition, based on the foregoing descriptions, the target three-dimensional model may include one or more three-dimensional slices. If the target three-dimensional model includes one three-dimensional slice, the target data structure is hierarchically searched based on a slice index to obtain data of the three-dimensional slice as the data of the target three-dimensional model. Alternatively, if the target three-dimensional model includes a plurality of three-dimensional slices, the target data structure is hierarchically searched based on a plurality of slice indexes to separately obtain data of the plurality of three-dimensional slices corresponding to the plurality of slice indexes, and the data of the plurality of three-dimensional slices is integrated to obtain the data of the target three-dimensional model.

In the foregoing content, the data of the three-dimensional slice is stored into the target data structure, three-dimensional coordinates of the three-dimensional slice are stored into the coordinate mapping relationship, or attribute information of the three-dimensional slice is stored into the condition mapping relationship, to obtain the data of the target three-dimensional model. Certainly, the attribute information of the three-dimensional slice may alternatively be stored in the target data structure. In this way, when the three-dimensional indication information includes the query condition, the at least one slice index may be determined in addition to the foregoing third implementation, so that the data of the target three-dimensional model is obtained in the foregoing step (2). Alternatively, the data of the target three-dimensional model may be obtained in another manner.

To be specific, in some other embodiments, the target virtual space is divided into a plurality of three-dimensional slices, data and attribute information of the plurality of three-dimensional slices are stored hierarchically based on a target data structure, and the three-dimensional indication information includes a query condition. In this case, an implementation process of obtaining the data of the target three-dimensional model based on the target URL and the three-dimensional indication information includes: determining a plurality of slice indexes based on the target URL, where the plurality of slice indexes are indexes of the plurality of three-dimensional slices; hierarchically searching the target data structure based on the plurality of slice indexes to obtain the data of the plurality of three-dimensional slices and the attribute information of each three-dimensional slice; and selecting, from the plurality of three-dimensional slices based on the attribute information of the plurality of three-dimensional slices, a three-dimensional slice that meets the query condition, and using data of the selected three-dimensional slice as the data of the target three-dimensional model.

An implementation process of determining the plurality of slice indexes based on the target URL includes: determining the plurality of slice indexes from a condition mapping relationship based on the target URL. In this case, the condition mapping relationship stores a mapping relationship between the target URL and slice indexes of all three-dimensional slices in the target virtual space.

Because the data and the attribute information of the plurality of three-dimensional slices are stored hierarchically into the target data structure, and the three-dimensional indication information includes the query condition, the attribute information of the three-dimensional slice does not need to be queried from the condition mapping relationship, and the attribute information of the three-dimensional slice may be obtained when the data of the three-dimensional slice is obtained from the target data structure. Certainly, the condition mapping relationship may not store the attribute information of the three-dimensional slice, so that storage space occupied by the condition mapping relationship can be reduced.

Because the three-dimensional indication information includes the query condition, and the query condition indicates an attribute that the target three-dimensional model meets, the attribute information of the plurality of three-dimensional slices may be compared with the query condition, to select a three-dimensional slice whose attribute information meets the query condition. If only one three-dimensional slice meets the query condition, data of the three-dimensional slice is used as the data of the target three-dimensional model. If a plurality of three-dimensional slices meet the query condition, data of the plurality of three-dimensional slices is integrated into the data of the target three-dimensional model.

Continuing from the descriptions above, before the data of the plurality of three-dimensional slices and the attribute information of each three-dimensional slice are obtained from the target data structure, the target virtual space may be further divided into the plurality of three-dimensional slices; indexes of the plurality of three-dimensional slices are set to obtain a plurality of slice indexes; and the data of the plurality of three-dimensional slices and the attribute information of each three-dimensional slice are stored into the target data structure based on the plurality of slice indexes.

For division of the three-dimensional slices, setting of the slice indexes, the attribute information, and related information of the target data structure, refer to the foregoing descriptions. Details are not described herein again.

**Step 403:** Send the data of the target three-dimensional model to the user terminal.

After receiving the data of the target three-dimensional model, the user terminal may render and display the target three-dimensional model, or may perform another operation based on the data of the target three-dimensional model. This is not limited in this embodiment of this application.

The foregoing is an implementation process in which the first node obtains the data of the target three-dimensional model from cached three-dimensional data. However, based on the foregoing descriptions, the first node is a node that is in the content delivery network and that is communicatively connected to the user terminal, and is not a central node communicatively connected to a content origin server. In this case, the first node may not cache the data of the target three-dimensional model. Therefore, in some embodiments, if the first node caches the data of the target three-dimensional model, the data of the target three-dimensional model is obtained from three-dimensional data cached by the first node based on the target URL and the three-dimensional indication information; and if the first node does not cache all the data of the target three-dimensional model, a second node is determined, based on a feature of the target three-dimensional model, from the plurality of nodes included in the content delivery network, and the data of the target three-dimensional model is obtained, based on the target URL and the three-dimensional indication information, from three-dimensional data cached by the second node.

Based on the foregoing descriptions, the first node is an edge node or a secondary node in the content delivery network. Generally, the edge node or the secondary node is closer to the user terminal. Therefore, when the first node caches the data of the target three-dimensional model, the data of the target three-dimensional model is directly obtained from the first node, so that data obtaining efficiency can be improved. When the first node does not cache the data of the target three-dimensional model, to quickly and accurately obtain the data of the target three-dimensional model, the second node may be determined from the plurality of nodes except the first node based on the feature of the target three-dimensional model, to obtain the data of the target three-dimensional model through the second node.

In some embodiments, the content delivery network further includes a scheduling node; and an implementation process of determining, based on the feature of the target three-dimensional model, the second node from the plurality of nodes included in the content delivery network includes: if the first node caches origin pull scheduling information, determining the second node from the origin pull scheduling information based on the feature of the target three-dimensional model, where the origin pull scheduling information indicates a node that performs data origin pull for a three-dimensional model having a different feature; or if the first node does not cache the origin pull scheduling information, obtaining the origin pull scheduling information from the scheduling node, and determining the second node from the origin pull scheduling information based on the feature of the target three-dimensional model.

To quickly determine the second node from the origin pull scheduling information, when the first node caches the origin pull scheduling information, the second node may be determined from the origin pull scheduling information based on the feature of the target three-dimensional model. When the first node does not cache the origin pull scheduling information, the origin pull scheduling information may be obtained from the scheduling node, so that the first node caches the origin pull scheduling information, and the second node is determined from the origin pull scheduling information based on the feature of the target three-dimensional model. Certainly, when the first node does not cache the origin pull scheduling information, a second node determining request may be sent to the scheduling node, where the second node determining request carries the feature of the target three-dimensional model, so that the scheduling node determines the second node from the origin pull scheduling information based on the feature of the target three-dimensional model, and sends an identifier of the second node to the first node.

The first node is a node communicatively connected to the user terminal. When the first node does not cache the data of the target three-dimensional model, data origin pull needs to be performed, that is, the second node is determined, and the data of the target three-dimensional model is obtained through the second node. The second node may be a node connected to the first node and located at a same layer as the first node, or may be a node connected to the first node and located at an upper layer of the first node. For example, if the first node is an edge node in the content delivery network, the second node may be another edge node connected to the edge node, or may be a central node connected to the edge node and located at an upper layer of the edge node; or if the first node is a secondary node in the content delivery network, the second node may be another secondary node connected to the secondary node, or may be an edge node connected to the secondary node and located at an upper layer of the secondary node.

Because the origin pull scheduling information indicates the node that performs data origin pull for the three-dimensional model having a different feature, in this case, when features of three-dimensional models are different, there may be different nodes that perform data origin pull. A feature of a three-dimensional model may be a volume of the three-dimensional model, cold and hot properties of data, or the like. For example, if the feature of the three-dimensional model is the volume of the three-dimensional model, the origin pull scheduling information may indicate that a data origin pull node for a three-dimensional model whose volume is greater than a volume threshold is a node at an upper layer, and a data origin pull node for a three-dimensional model whose volume is not greater than the volume threshold is a node at a same layer. If the feature of the three-dimensional model is the cold and hot properties of data, the origin pull scheduling information may indicate that a data origin pull node for a three-dimensional model whose data is cold data is a node at an upper layer, and a data origin pull node for a three-dimensional model whose data is hot data is a node at a same layer.

In an example, if a volume of the target three-dimensional model is greater than the volume threshold, a node that is connected to the first node and located at the upper layer of the first node is determined as the second node by using the origin pull scheduling information; or if the volume of the target three-dimensional model is not greater than the volume threshold, a node that is connected to the first node and located at the same layer as the first node is determined as the second node by using the origin pull scheduling information.

When the volume of the target three-dimensional model is large, compared with the node that is connected to the first node and located at the same layer as the first node, the node that is connected to the first node and located at the upper layer of the first node stores more three-dimensional data, has low load, and can respond to the first node in time. Therefore, the node that is connected to the first node and located at the upper layer of the first node may be determined as the second node. When the volume of the target three-dimensional model is small, to reduce a transmission delay of the data of the target three-dimensional model, the node that is connected to the first node and located at the same layer as the first node may be determined as the second node.

In another example, if the data of the target three-dimensional model is cold data, a node that is connected to the first node and located at the upper layer of the first node is determined as the second node by using the origin pull scheduling information; or if the data of the target three-dimensional model is hot data, a node that is connected to the first node and located at the same layer as the first node is determined as the second node by using the origin pull scheduling information.

When the data of the target three-dimensional model is cold data, it may be inferred that there is a high probability that the node that is connected to the first node and located at the same layer as the first node does not receive a data obtaining request related to the target three-dimensional model, that is, there is a high probability that the node at the same layer does not cache the data of the target three-dimensional model. Therefore, the node that is connected to the first node and located at the upper layer of the first node may be determined as the second node, to improve data obtaining efficiency. When the data of the target three-dimensional model is hot data, it may be inferred that there is a high probability that the node that is connected to the first node and located at the same layer as the first node receives the data obtaining request related to the target three-dimensional model, that is, there is a high probability that the node at the same layer caches the data of the target three-dimensional model. Therefore, the node that is connected to the first node and located at the same layer as the first node may be determined as the second node, to reduce a transmission delay of data of the three-dimensional model.

It should be noted that the cold data is data requested by the user terminal infrequently, and the hot data is data requested by the user terminal frequently. The feature of the three-dimensional model may be not only the volume and the cold and hot properties of data, but may also be another feature. A storage medium for caching three-dimensional data in the plurality of nodes in the content delivery network may be a memory, a solid-state disk (solid-state drive, SSD), a magnetic disk, or the like. This is not limited in this embodiment of this application.

When the data of the target three-dimensional model is obtained through the second node, it may be determined whether the second node caches the data of the target three-dimensional model. If the second node caches the data of the target three-dimensional model, the data of the target three-dimensional model is directly obtained from the second node. If the second node does not cache the data of the target three-dimensional model, the second node may further determine a third node based on the feature of the target three-dimensional model, and so on, until the data of the target three-dimensional model is obtained. A manner of determining the third node is the same as the foregoing manner of determining the second node, and details are not described herein again.

After the first node obtains the data of the target three-dimensional model through the second node, the first node may cache the data of the target three-dimensional model. In this way, when receiving a data obtaining request sent by the user terminal for the target three-dimensional model again, the first node may directly send the data to the user terminal, without a need of data origin pull, so that the user terminal can quickly obtain the data of the target three-dimensional model.

During data origin pull in the foregoing method, if it is determined that none of the nodes in the content delivery network caches the data of the target three-dimensional model, the data of the target three-dimensional model may be obtained from the content origin server.

In this embodiment of this application, because the content delivery network can nearby obtain data needed by the user, sending three-dimensional data to the user terminal through the content delivery network can improve a three-dimensional data delivery speed. In addition, an edge node closest to the user terminal is used as the first node, and the three-dimensional data needed by the user is cached in the first node, so that efficiency of obtaining the three-dimensional data by the user terminal can be improved. Because the three-dimensional indication information may be represented in a plurality of different manners, the user terminal can obtain needed data of a three-dimensional model based on a requirement of the user terminal, to reduce a limitation of a data obtaining request. In addition, the three-dimensional data may be obtained by using the data obtaining request and based on a plurality of network transfer protocols. Therefore, the method provided in this embodiment of this application is adapted to various service scenarios, and is widely applicable. In addition, the target virtual space is divided into the plurality of three-dimensional slices, and the data of the plurality of three-dimensional slices is stored hierarchically based on corresponding slice indexes, so that occupation of storage space can be reduced. Hierarchical search is performed on the three-dimensional slices based on the slice indexes, so that a query speed can be improved, and query performance can be optimized. When the first node caches the data of the target three-dimensional model, the user terminal directly obtains the data of the target three-dimensional model from the first node, so that data obtaining efficiency can be improved, and network transmission costs are reduced. When the first node does not cache the data of the target three-dimensional model, the second node may be determined based on the feature of the three-dimensional model. The second node may be a node at the same layer as the first node or at the upper layer of the first node and connected to the first node. Therefore, in this embodiment of this application, not only upward data origin pull can be performed, but also leftward and rightward data origin pull can be performed, to increase manners of data origin pull. In conclusion, this embodiment of this application provides a high-performance and low-cost method for quickly delivery and sharing three-dimensional data.

FIG. 10 is a diagram of a structure of a three-dimensional data obtaining apparatus according to an embodiment of this application. The three-dimensional data obtaining apparatus may be implemented as a part or all of a first node by using software, hardware, or a combination thereof. The first node may be the compute device shown in FIG. 3. Refer to FIG. 10. The apparatus includes a receiving module 1001, an obtaining module 1002, and a sending module 1003.

The receiving module 1001 is configured to receive a data obtaining request sent by a user terminal, where the data obtaining request carries a target uniform resource locator URL and three-dimensional indication information, the target URL is a URL of target virtual space, and the three-dimensional indication information indicates a target three-dimensional model in the target virtual space. For a detailed implementation process, refer to related descriptions in step 401 in the embodiment shown in FIG. 4.

The obtaining module 1002 is configured to obtain data of the target three-dimensional model based on the target URL and the three-dimensional indication information. For a detailed implementation process, refer to related descriptions in step 402 in the embodiment shown in FIG. 4.

The sending module 1003 is configured to send the data of the target three-dimensional model to the user terminal. For a detailed implementation process, refer to related descriptions in step 403 in the embodiment shown in FIG. 4.

Optionally, the obtaining module 1002 includes:
a first determining submodule, configured to: if the first node does not cache all the data of the target three-dimensional model, determine a second node from a plurality of nodes based on a feature of the target three-dimensional model, and obtain, based on the target URL and the three-dimensional indication information, the data of the target three-dimensional model from three-dimensional data cached by the second node.

Optionally, a content delivery network further includes a scheduling node; and the first determining submodule is specifically configured to:
if the first node caches origin pull scheduling information, determine the second node from the origin pull scheduling information based on the feature of the target three-dimensional model, where the origin pull scheduling information indicates a node that performs data origin pull for a three-dimensional model having a different feature; or
if the first node does not cache the origin pull scheduling information, obtain the origin pull scheduling information from the scheduling node, and determine the second node from the origin pull scheduling information based on the feature of the target three-dimensional model.

Optionally, the target virtual space is divided into a plurality of three-dimensional slices, and data of the plurality of three-dimensional slices is stored hierarchically based on a target data structure; and the obtaining module 1002 includes:
a second determining submodule, configured to determine at least one slice index based on the target URL and the three-dimensional indication information, where the at least one slice index is an index of at least one three-dimensional slice included in the target three-dimensional model; and
a first search submodule, configured to hierarchically search the target data structure based on the at least one slice index to obtain data of the at least one three-dimensional slice.

Optionally, the three-dimensional indication information includes a three-dimensional coordinate range; and the second determining submodule is specifically configured to:
determine the at least one slice index from a coordinate mapping relationship based on the target URL and the three-dimensional coordinate range, where the coordinate mapping relationship is used to store a mapping relationship among a URL, three-dimensional coordinates, and a slice index.

Optionally, the target three-dimensional model is a cone-shaped model, and the three-dimensional indication information includes a cone parameter; and the second determining submodule is specifically configured to:
determine, based on the cone parameter, a three-dimensional coordinate range corresponding to the target three-dimensional model; and
determine the at least one slice index from a coordinate mapping relationship based on the target URL and the three-dimensional coordinate range, where the coordinate mapping relationship is used to store a mapping relationship among a URL, three-dimensional coordinates, and a slice index.

Optionally, the apparatus further includes:
a first division module, configured to divide the target virtual space into the plurality of three-dimensional slices;
a first setting module, configured to set indexes of the plurality of three-dimensional slices to obtain a plurality of slice indexes;
a first storage module, configured to store the data of the plurality of three-dimensional slices into the target data structure based on the plurality of slice indexes; and
a second storage module, configured to store the target URL, three-dimensional coordinates of the plurality of three-dimensional slices, and the plurality of slice indexes into the coordinate mapping relationship.

Optionally, the three-dimensional indication information includes a query condition; and the second determining submodule is specifically configured to:
determine, from a condition mapping relationship based on the target URL and the query condition, a slice index that meets the query condition, to obtain the at least one slice index, where the condition mapping relationship is used to store a mapping relationship among a URL, a slice attribute, and a slice index.

Optionally, the apparatus further includes:
a second division module, configured to divide the target virtual space into the plurality of three-dimensional slices;
a second setting module, configured to set indexes of the plurality of three-dimensional slices to obtain a plurality of slice indexes;
a third storage module, configured to store the data of the plurality of three-dimensional slices into the target data structure based on the plurality of slice indexes; and
a fourth storage module, configured to store the target URL, attribute information of the plurality of three-dimensional slices, and the plurality of slice indexes into the condition mapping relationship.

Optionally, the target virtual space is divided into a plurality of three-dimensional slices, data and attribute information of the plurality of three-dimensional slices are stored hierarchically based on a target data structure, and the three-dimensional indication information includes a query condition; and the obtaining module 1002 includes:
a third determining submodule, configured to determine a plurality of slice indexes based on the target URL, where the plurality of slice indexes are indexes of the plurality of three-dimensional slices;
a second search submodule, configured to hierarchically search in the target data structure based on the plurality of slice indexes to obtain the data of the plurality of three-dimensional slices and the attribute information of each three-dimensional slice; and
a selection submodule, configured to select, from the plurality of three-dimensional slices based on the attribute information of the plurality of three-dimensional slices, a three-dimensional slice that meets the query condition, and use data of the selected three-dimensional slice as the data of the target three-dimensional model.

In this embodiment of this application, an edge node closest to the user terminal is used as the first node, and data needed by a user is cached in the first node, so that efficiency of obtaining three-dimensional data by the user terminal can be improved. Because the three-dimensional indication information may be represented in a plurality of different manners, the user terminal can obtain needed data of a three-dimensional model based on a requirement of the user terminal, to reduce a limitation of a data obtaining request. In addition, the three-dimensional data may be obtained by using the data obtaining request and based on a plurality of network transfer protocols. Therefore, the method provided in this embodiment of this application is adapted to various service scenarios, and is widely applicable. In addition, the target virtual space is divided into the plurality of three-dimensional slices, and the data of the plurality of three-dimensional slices is stored hierarchically based on corresponding slice indexes, so that occupation of storage space can be reduced. Hierarchical search is performed on the three-dimensional slices based on the slice indexes, so that a query speed can be improved, and query performance can be optimized. When the first node caches the data of the target three-dimensional model, the user terminal directly obtains the data of the target three-dimensional model from the first node, so that data obtaining efficiency can be improved, and network transmission costs are reduced. When the first node does not cache the data of the target three-dimensional model, the second node may be determined based on the feature of the three-dimensional model. The second node may be a node at the same layer as the first node or at the upper layer of the first node and connected to the first node. Therefore, in this embodiment of this application, not only upward data origin pull can be performed, but also leftward and rightward data origin pull can be performed, to increase manners of data origin pull. In conclusion, this embodiment of this application provides a high-performance and low-cost method for quickly delivery and sharing three-dimensional data.

It should be noted that, when the three-dimensional data obtaining apparatus provided in the foregoing embodiment obtains three-dimensional data, division into the foregoing functional modules is used as an example for illustration. In actual application, the foregoing functions may be assigned as needed to be implemented by different functional modules. In other words, an internal structure of the apparatus is divided into different functional modules, to implement all or part of the functions described above. In addition, the three-dimensional data obtaining apparatus provided in the foregoing embodiments and the three-dimensional data obtaining method embodiment belong to the same concept. For the specific implementation process, refer to the method embodiments. Details are not described herein again.

In some embodiments, the receiving module 1001, the obtaining module 1002, and the sending module 1003 may all be implemented by using software, or may be implemented by using hardware. For example, the following uses the receiving module 1001 as an example to describe an implementation of the receiving module 1001. Similarly, for implementations of the obtaining module 1002 and the sending module 1003, refer to the implementation of the receiving module.

The module is used as an example of a software functional unit, and the receiving module may include code that is run on a compute instance. The compute instance may include at least one of a physical host (compute device), a virtual machine, and a container. Further, there may be one or more compute instances. For example, the receiving module may include code that is run on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is set in one region. A communication gateway needs to be set in each VPC for communication between two VPCs in a same region or between VPCs in different regions. Interconnection between the VPCs is implemented through the communication gateway.

A module is used as an example of a hardware functional unit, and the receiving module may include at least one compute device, for example, a server. Alternatively, the receiving module may be a device implemented by using an application-specific integrated circuit (application-specific integrated circuit, ASIC), a programmable logic device (programmable logic device, PLD), or the like. The PLD may be implemented by a complex programmable logic device (complex programmable logic device, CPLD), a field-programmable gate array (field-programmable gate array, FPGA), a generic array logic (generic array logic, GAL), or any combination thereof.

A plurality of compute devices included in the receiving module may be distributed in a same region, or may be distributed in different regions. The plurality of compute devices included in the receiving module may be distributed in a same AZ, or may be distributed in different AZs. Similarly, the plurality of compute devices included in the receiving module may be distributed in a same VPC, or may be distributed in a plurality of VPCs. The plurality of compute devices may be any combination of compute devices such as a server, an ASIC, a PLD, a CPLD, an FPGA, and a GAL.

It should be noted that, in other embodiments, steps implemented by the receiving module, the obtaining module, and the sending module may be specified as required, and the receiving module, the obtaining module, and the sending module respectively implement different steps in the three-dimensional data obtaining method to implement all functions of the three-dimensional data obtaining apparatus.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

As shown in FIG. 11, the compute device cluster includes at least one compute device. A memory 303 in one or more compute devices in the compute device cluster may store same instructions for performing the three-dimensional data obtaining method.

In some possible implementations, the memory 303 in the one or more compute devices in the compute device cluster may alternatively store some instructions for performing the three-dimensional data obtaining method. In other words, a combination of the one or more compute devices may jointly execute the instructions for performing the three-dimensional data obtaining method.

It should be noted that memories 303 in different compute devices in the compute device cluster may store different instructions respectively for performing some functions of the three-dimensional data obtaining apparatus. To be specific, the instructions stored in the memories 303 in the different compute devices may be used to implement functions of one or more of the receiving module, the obtaining module, and the sending module.

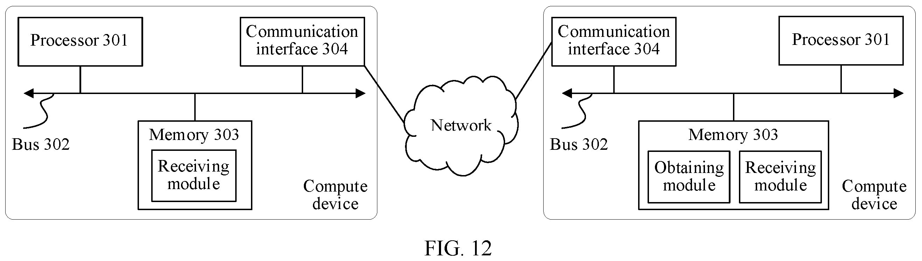

In some possible implementations, the one or more compute devices in the compute device cluster may be connected through a network. The network may be a wide area network, a local area network, or the like. FIG. 12 shows a possible implementation. As shown in FIG. 12, two compute devices are connected through a network. Specifically, each compute device is connected to the network through a communication interface in the compute device. In this possible implementation, the memory 303 in one of the compute devices stores instructions for performing the function of the receiving module. In addition, the memory 303 in another compute device stores instructions for performing a function of the obtaining module and the receiving module.

A connection manner between the compute device clusters shown in FIG. 12 may be that, considering that a large amount of data needs to be stored and obtained in the three-dimensional data obtaining method provided in this application, it is considered that functions implemented by the obtaining module and the receiving module are performed by another compute device.

It should be understood that a function of the compute device shown in FIG. 12 may alternatively be completed by a plurality of compute devices.

An embodiment of this application further provides another compute device cluster. For a connection relationship between compute devices in the compute device cluster, refer to the connection manners of the compute device clusters in FIG. 11 and FIG. 12 similarly. A difference lies in that a memory 303 in one or more compute devices in the compute device cluster may store same instructions for performing the three-dimensional data obtaining method.

In some possible implementations, the memory 303 in the one or more compute devices in the compute device cluster may alternatively store some instructions for performing the three-dimensional data obtaining method. In other words, a combination of the one or more compute devices may jointly execute the instructions for performing the three-dimensional data obtaining method.

It should be noted that memories 303 in different compute devices in the compute device cluster may store different instructions for performing some functions of a content delivery network. To be specific, the instructions stored in the memories 303 in the different compute devices may implement functions of one or more apparatuses of an edge node, a secondary node, and a central node.

An embodiment of this application further provides a computer-readable storage medium. The computer-readable storage medium may be any usable medium that can be stored in a compute device cluster, or a data storage device like a data center including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the compute device cluster to perform the foregoing three-dimensional data obtaining method.

An embodiment of this application further provides a computer program product including instructions. The computer program product may be software or a program product that includes the instructions and that can run on a compute device cluster or be stored in any usable medium. When the computer program product runs on the compute device cluster, the compute device cluster is caused to perform the foregoing three-dimensional data obtaining method.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedures or functions based on embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like. It should be noted that the computer-readable storage medium mentioned in embodiments of this application may be a non-volatile storage medium, that is, may be a non-transitory storage medium.

It should be understood that "a plurality of" in this specification means two or more. In descriptions of embodiments of this application, "/" indicates "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions.

The foregoing descriptions are merely embodiments of this application, but are not intended to limit this application. Any modification, equivalent replacement, or improvement made without departing from the spirit and principle of this application should fall within the protection scope of this application.

## Claims

1. A three-dimensional data obtaining method, applied to a first node in a content delivery network, wherein the content delivery network comprises a plurality of nodes, and the first node is an edge node in the plurality of nodes; and the method comprises:
receiving a data obtaining request sent by a user terminal, wherein the data obtaining request carries a target uniform resource locator URL and three-dimensional indication information, the target URL is a URL of target virtual space, and the three-dimensional indication information indicates a target three-dimensional model in the target virtual space;
obtaining data of the target three-dimensional model based on the target URL and the three-dimensional indication information; and
sending the data of the target three-dimensional model to the user terminal.

2. The method according to claim 1, wherein the obtaining the data of the target three-dimensional model based on the target URL and the three-dimensional indication information comprises:
if the first node does not cache all the data of the target three-dimensional model, determining a second node from the plurality of nodes based on a feature of the target three-dimensional model, and obtaining, based on the target URL and the three-dimensional indication information, the data of the target three-dimensional model from three-dimensional data cached by the second node.

3. The method according to claim 2, wherein the content delivery network further comprises a scheduling node, and the determining the second node from the plurality of nodes based on the feature of the target three-dimensional model comprises:
if the first node caches origin pull scheduling information, determining the second node from the origin pull scheduling information based on the feature of the target three-dimensional model, wherein the origin pull scheduling information indicates a node that performs data origin pull for a three-dimensional model having a different feature; or
if the first node does not cache the origin pull scheduling information, obtaining the origin pull scheduling information from the scheduling node, and determining the second node from the origin pull scheduling information based on the feature of the target three-dimensional model.

4. The method according to any one of claims 1 to 3, wherein the target virtual space is divided into a plurality of three-dimensional slices, and data of the plurality of three-dimensional slices is stored hierarchically based on a target data structure; and
the obtaining the data of the target three-dimensional model based on the target URL and the three-dimensional indication information comprises:
determining at least one slice index based on the target URL and the three-dimensional indication information, wherein the at least one slice index is an index of at least one three-dimensional slice comprised in the target three-dimensional model; and
hierarchically searching the target data structure based on the at least one slice index to obtain data of the at least one three-dimensional slice.

5. The method according to claim 4, wherein the three-dimensional indication information comprises a three-dimensional coordinate range; and the determining the at least one slice index based on the target URL and the three-dimensional indication information comprises:
determining the at least one slice index from a coordinate mapping relationship based on the target URL and the three-dimensional coordinate range, wherein the coordinate mapping relationship is used to store a mapping relationship among a URL, three-dimensional coordinates, and a slice index.

6. The method according to claim 4, wherein the target three-dimensional model is a cone-shaped model, and the three-dimensional indication information comprises a cone parameter; and the determining the at least one slice index based on the target URL and the three-dimensional indication information comprises:
determining, based on the cone parameter, a three-dimensional coordinate range corresponding to the target three-dimensional model; and
determining the at least one slice index from a coordinate mapping relationship based on the target URL and the three-dimensional coordinate range, wherein the coordinate mapping relationship is used to store a mapping relationship among a URL, three-dimensional coordinates, and a slice index.

7. The method according to claim 5 or 6, wherein before the receiving the data obtaining request sent by the user terminal, the method further comprises:
dividing the target virtual space into the plurality of three-dimensional slices;
setting indexes of the plurality of three-dimensional slices to obtain a plurality of slice indexes;
storing the data of the plurality of three-dimensional slices into the target data structure based on the plurality of slice indexes; and
storing the target URL, three-dimensional coordinates of the plurality of three-dimensional slices, and the plurality of slice indexes into the coordinate mapping relationship.

8. The method according to claim 4, wherein the three-dimensional indication information comprises a query condition; and the determining the at least one slice index based on the target URL and the three-dimensional indication information comprises:
determining, from a condition mapping relationship based on the target URL and the query condition, a slice index that meets the query condition, to obtain the at least one slice index, wherein the condition mapping relationship is used to store a mapping relationship among a URL, a slice attribute, and a slice index.

9. The method according to claim 8, wherein before the receiving the data obtaining request sent by the user terminal, the method further comprises:
dividing the target virtual space into the plurality of three-dimensional slices;
setting indexes of the plurality of three-dimensional slices to obtain a plurality of slice indexes;
storing the data of the plurality of three-dimensional slices into the target data structure based on the plurality of slice indexes; and
storing the target URL, attribute information of the plurality of three-dimensional slices, and the plurality of slice indexes into the condition mapping relationship.

10. The method according to any one of claims 1 to 3, wherein the target virtual space is divided into a plurality of three-dimensional slices, data and attribute information of the plurality of three-dimensional slices are stored hierarchically based on a target data structure, and the three-dimensional indication information comprises a query condition; and
the obtaining the data of the target three-dimensional model based on the target URL and the three-dimensional indication information comprises:
determining a plurality of slice indexes based on the target URL, wherein the plurality of slice indexes are indexes of the plurality of three-dimensional slices;
hierarchically searching the target data structure based on the plurality of slice indexes to obtain the data of the plurality of three-dimensional slices and the attribute information of each three-dimensional slice; and
selecting, from the plurality of three-dimensional slices based on the attribute information of the plurality of three-dimensional slices, a three-dimensional slice that meets the query condition, and using data of the selected three-dimensional slice as the data of the target three-dimensional model.

11. A three-dimensional data obtaining apparatus, comprised in a first node in a content delivery network, wherein the content delivery network comprises a plurality of nodes, and the first node is an edge node in the plurality of nodes; and the apparatus comprises:
a receiving module, configured to receive a data obtaining request sent by a user terminal, wherein the data obtaining request carries a target uniform resource locator URL and three-dimensional indication information, the target URL is a URL of target virtual space, and the three-dimensional indication information indicates a target three-dimensional model in the target virtual space;
an obtaining module, configured to obtain data of the target three-dimensional model based on the target URL and the three-dimensional indication information; and
a sending module, configured to send the data of the target three-dimensional model to the user terminal.

12. The apparatus according to claim 11, wherein the obtaining module comprises:
a first determining submodule, configured to: if the first node does not cache all the data of the target three-dimensional model, determine a second node from the plurality of nodes based on a feature of the target three-dimensional model, and obtain, based on the target URL and the three-dimensional indication information, the data of the target three-dimensional model from three-dimensional data cached by the second node.

13. The apparatus according to claim 12, wherein the content delivery network further comprises a scheduling node; and the first determining submodule is specifically configured to:
if the first node caches origin pull scheduling information, determine the second node from the origin pull scheduling information based on the feature of the target three-dimensional model, wherein the origin pull scheduling information indicates a node that performs data origin pull for a three-dimensional model having a different feature; or
if the first node does not cache the origin pull scheduling information, obtain the origin pull scheduling information from the scheduling node, and determine the second node from the origin pull scheduling information based on the feature of the target three-dimensional model.

14. The apparatus according to any one of claims 11 to 13, wherein the target virtual space is divided into a plurality of three-dimensional slices, data of the plurality of three-dimensional slices is stored hierarchically based on a target data structure; and the obtaining module comprises:
a second determining submodule, configured to determine at least one slice index based on the target URL and the three-dimensional indication information, wherein the at least one slice index is an index of at least one three-dimensional slice comprised in the target three-dimensional model; and
a first search submodule, configured to hierarchically search the target data structure based on the at least one slice index to obtain data of the at least one three-dimensional slice.

15. The apparatus according to claim 14, wherein the three-dimensional indication information comprises a three-dimensional coordinate range; and the second determining submodule is specifically configured to:
determine the at least one slice index from a coordinate mapping relationship based on the target URL and the three-dimensional coordinate range, wherein the coordinate mapping relationship is used to store a mapping relationship among a URL, three-dimensional coordinates, and a slice index.

16. The apparatus according to claim 14, wherein the target three-dimensional model is a cone-shaped model, and the three-dimensional indication information comprises a cone parameter; and the second determining submodule is specifically configured to:
determine, based on the cone parameter, a three-dimensional coordinate range corresponding to the target three-dimensional model; and
determine the at least one slice index from a coordinate mapping relationship based on the target URL and the three-dimensional coordinate range, wherein the coordinate mapping relationship is used to store a mapping relationship among a URL, three-dimensional coordinates, and a slice index.

17. The apparatus according to claim 15 or 16, wherein the apparatus further comprises:
a first division module, configured to divide the target virtual space into the plurality of three-dimensional slices;
a first setting module, configured to set indexes of the plurality of three-dimensional slices to obtain a plurality of slice indexes;
a first storage module, configured to store the data of the plurality of three-dimensional slices into the target data structure based on the plurality of slice indexes; and
a second storage module, configured to store the target URL, three-dimensional coordinates of the plurality of three-dimensional slices, and the plurality of slice indexes into the coordinate mapping relationship.

18. The apparatus according to claim 14, wherein the three-dimensional indication information comprises a query condition; and the second determining submodule is specifically configured to:
determine, from a condition mapping relationship based on the target URL and the query condition, a slice index that meets the query condition, to obtain the at least one slice index, wherein the condition mapping relationship is used to store a mapping relationship among a URL, a slice attribute, and a slice index.

19. The apparatus according to claim 18, wherein the apparatus further comprises:
a second division module, configured to divide the target virtual space into the plurality of three-dimensional slices;
a second setting module, configured to set indexes of the plurality of three-dimensional slices to obtain a plurality of slice indexes;
a third storage module, configured to store the data of the plurality of three-dimensional slices into the target data structure based on the plurality of slice indexes; and
a fourth storage module, configured to store the target URL, attribute information of the plurality of three-dimensional slices, and the plurality of slice indexes into the condition mapping relationship.

20. The apparatus according to any one of claims 11 to 13, wherein the target virtual space is divided into a plurality of three-dimensional slices, data and attribute information of the plurality of three-dimensional slices are stored hierarchically based on a target data structure, and the three-dimensional indication information comprises a query condition; and the obtaining module comprises:
a third determining submodule, configured to determine a plurality of slice indexes based on the target URL, wherein the plurality of slice indexes are indexes of the plurality of three-dimensional slices;
a second search submodule, configured to hierarchically search the target data structure based on the plurality of slice indexes to obtain the data of the plurality of three-dimensional slices and the attribute information of each three-dimensional slice; and
a selection submodule, configured to select, from the plurality of three-dimensional slices based on the attribute information of the plurality of three-dimensional slices, a three-dimensional slice that meets the query condition, and use data of the selected three-dimensional slice as the data of the target three-dimensional model.

21. A compute device cluster, comprising at least one compute device, wherein each compute device comprises a memory and a processor; and
the memory of the at least one compute device is configured to store computer instructions, and the processor of the at least one compute device is configured to execute the instructions stored in the memory of the at least one compute device, to cause the compute device cluster to perform the method according to any one of claims 1 to 10.

22. A computer-readable storage medium, wherein the storage medium stores instructions, and when the instructions are run by a compute device cluster, the compute device cluster is caused to perform the method according to any one of claims 1 to 10.

23. A computer program product comprising instructions, wherein when the instructions are run by a compute device cluster, the compute device cluster is caused to perform the method according to any one of claims 1 to 10.
